# FASCICULE DE BREVET EUROPEEN

(11) **EP 1 657 840 B1**
(45) Date de publication et mention de la délivrance du brevet: **28.05.2008**
(21) Numéro de dépôt: 05110712.6
(22) Date de dépôt: 14.11.2005
(51) Int. Cl.: H04J 14/02

(54) **Réseau de communication (D)WDM à traitement périodique d'un multiplexage spectral**
DWDM-Kommunikationsnetz mit periodischer Wellenlängen-Multiplexierung
DWDM communication network with periodic wavelenght multiplexing

(30) Priorité: 15.11.2004 FR 0452614
(43) Date de publication de la demande: 17.05.2006
(73) Titulaire: Alcatel Lucent, 75008 Paris (FR)
(72) Inventeur: Zami, Thierry, 91300 Massy (FR); Dorgeuille, François, 75014 Paris (FR)
(74) Mandataire: Shamsaei Far, Hassan

(56) Documents cités:
- EP-A- 1 271 827
- US-A1- 2002 080 443
- US-B1- 6 616 349

## Description

L'invention concerne le domaine des réseaux optiques à multiplexage de longueurs d'onde (ou (D)WDM pour « (Dense) Wavelength Division Multiplexing »), et plus particulièrement la transmission des données (ou signaux optiques) au sein de tels réseaux.

Comme le sait l'homme de l'art, le multiplexage de longueurs d'onde est une technique qui permet d'optimiser l'utilisation des ressources de transmission de données (par exemple des fibres optiques) d'un réseau optique. Cette optimisation est particulièrement importante lorsque les ressources précitées sont limitées ou bien deviennent insuffisantes du fait du raccordement de nouvelles stations (ou noeuds) de communication, ou encore lorsqu'il s'agit de limiter le coût du réseau.

Dans certaines situations le multiplexage de longueurs d'onde ne suffit pas et c'est l'architecture du réseau qui doit être optimisée.

De nombreuses solutions ont été proposées à cet effet, comme par exemple l'intégration de dispositifs passifs d'insertion/extraction de multiplex, tels que les coupleurs optiques ou les multiplexeurs d'insertion/extraction (ou OADM pour « Optical Add and Drop Multiplexer »), éventuellement de type reconfigurable (R-OADM), ou la co-propagation des trafics montant (« upstream ») et descendant (« downstream ») au sein d'une même fibre grâce au partage de sa bande passante. Mais, ces solutions peuvent encore ne pas suffire.

Par ailleurs, l'extension d'un réseau optique est limitée par sa portée, c'est-à-dire par la puissance nécessaire à la transmission des multiplex entre le noeud d'accès au réseau (ou « hub »), qui est généralement raccordé à un réseau fédérateur ou (« backbone »), et la station de communication qui est la plus éloignée de celui-ci. Afin d'économiser cette puissance, il a été proposé un mode de couplage déséquilibré du trafic provenant d'une station de communication donnée et du trafic provenant des portions de fibre optique situées en amont de cette station de communication. Par exemple, une station de communication située à proximité du noeud d'accès (hub) fait l'objet d'un couplage de type 10% / 90%, tandis qu'une station de communication située à proximité de l'extrémité du réseau fait l'objet d'un couplage de type 50% / 50%. Une telle optimisation des rapports de couplage permet de relâcher la contrainte relative à la puissance, mais elle ne permet pas de l'annuler.

L'invention a donc pour but d'améliorer la situation, et notamment d'optimiser l'architecture des réseaux optiques (D)WDM afin d'améliorer leurs performances (en termes de capacité et/ou d'économie de puissance), de préférence sans augmenter leur coût.

Elle propose à cet effet un réseau optique à multiplexage de longueurs d'onde, comprenant une fibre optique raccordée à un noeud d'accès (ou hub), par une entrée et/ou sortie d'un démultiplexeur et/ou multiplexeur comprenant N sorties et/ou entrées couplées audit noeud d'accès, et à des stations de communication pouvant délivrer et/ou recevoir des multiplex spectraux de signaux optiques modulés de différentes longueurs d'onde, par des moyens de couplage.

Il est important de noter que le composant appelé « démultiplexeur et/ou multiplexeur » désigne ici soit un simple démultiplexeur, soit un simple multiplexeur, soit encore un démultiplexeur/multiplexeur, selon qu'il est raccordé à une fibre optique de type monodirectionnel montante, monodirectionnel descendante ou bidirectionnel.

Un système pour accéder à un réseau bidirectionnel d'anneau de fibre optique WDM est décrit dans US 2002/0080443 A1. Le système comprend un noeud de réseau intersectant des premières et deuxièmes fibres du réseau d'anneau. Le noeud de réseau est couplé à une station d'accès de réseau par une seule paire de fibres d'accès. Le noeud de réseau a deux multiplexeurs d'insertion/extraction de longueur d'onde ("WADMs") chacun ayant une première entrée, une deuxième entrée, une première sortie et une deuxième sortie, et qui sont capables d'être individuellement arrangés dans un état de barre ou de croix pour chacune des longueurs d'onde sur le réseau d'anneau. Si pour une longueur d'onde donnée sur le réseau d'anneau, le premier et le deuxième WADMs sont dans l'état de barre, des signaux ayant une longueur d'onde donnée passent par le noeud de réseau dans les deux directions sans perturbation. Si pour une longueur d'onde donnée sur le réseau d'anneau, le premier WADM est dans l'état de barre et le deuxième WADM est dans l'état de croix, un signal ayant la longueur d'onde donnée sur la première fibre de réseau traverse le noeud de réseau sans perturbation. Cependant, un signal ayant la longueur d'onde donnée sur la deuxième fibre de réseau est extrait de la deuxième fibre de réseau. Si pour une longueur d'onde donnée, le premier WADM est dans l'état de croix et le deuxième WADM est dans l'état de barre, un signal ayant la longueur d'onde donnée sur la première fibre de réseau entrant le noeud de réseau est conduit aux éléments de réception, et un signal ayant la longueur d'onde donnée et fourni par des éléments de transmission est conduit à la première fibre de réseau afin de partir du noeud de réseau. Dans ce dernier cas, un signal ayant la longueur d'onde donnée sur la deuxième fibre de réseau, entrant dans le noeud de réseau, traverse le noeud de réseau sans perturbation, vers la deuxième fibre de réseau et part du noeud de réseau.

Ce document traite du problème de réduire des coûts en accédant à un réseau optique.

Le réseau optique selon l'invention peut se présenter selon deux déclinaisons différentes.

Dans une première déclinaison, le réseau optique se caractérise par le fait que :
- ses stations de communication sont chargées de délivrer et/ou recevoir des multiplex spectraux de signaux optiques modulés d'une bande de longueurs d'onde donnée parmi P bandes disjointes (c'est-à-dire qui ne se recouvrent pas deux à deux),
- l'un au moins de ses moyens de couplage est un multiplexeur et/ou démultiplexeur de bandes de type 2x1 comprenant i) une sortie et/ou entrée raccordée à une portion dite « aval » de la fibre optique, ii) une première entrée et/ou sortie raccordée à l'une des stations de communication (qui est alors dite « primaire ») et adaptée à sa bande de longueurs d'onde, et iii) une seconde entrée et/ou sortie raccordée à une portion dite « amont » de la fibre optique et adaptée à des longueurs d'onde différentes de celles passant par la première entrée et/ou sortie, et
- son démultiplexeur et/ou multiplexeur est de type périodique de manière à délivrer et/ou recevoir sur chacune de ses N sorties et/ou entrées des canaux dont les longueurs d'onde appartiennent à des ensembles (ou peignes) distincts de P longueurs d'ondes, chacune d'entre elles appartenant à une bande distincte parmi les P bandes disjointes.

Il est important de noter ici que les P bandes de longueurs d'onde disjointes (et donc distinctes) sont celles qui sont filtrées par les entrées ou sorties des multiplexeurs de bandes ou des démultiplexeurs de bandes.

Un tel réseau comprend au plus P stations de communication primaires raccordées à des multiplexeurs et/ou démultiplexeurs de bandes de type 2x1.

Son démultiplexeur et/ou multiplexeur peut être de type périodique cyclique. Dans ce cas, il peut par exemple se présenter sous la forme d'un dispositif de diffraction de longueurs d'onde en réseau de type AWG (pour « Arrayed Wavelength Grating ») ou d'une cascade de désentrelaceurs et/ou entrelaceurs.

Dans une seconde déclinaison, le réseau optique se caractérise par le fait que :
- ses stations de communication sont chargées de délivrer et/ou recevoir des multiplex spectraux de signaux optiques modulés d'un peigne de longueurs d'onde parmi P disjoints,
- l'un au moins de ses moyens de couplage est un entrelaceur et/ou désentrelaceur de longueurs d'onde de type 2x1, comprenant i) une sortie et/ou entrée raccordée à une portion aval de la fibre optique, ii) une première entrée et/ou sortie raccordée à l'une des stations de communication (qui est alors dite « primaire ») et adaptée à son peigne de longueurs d'onde, et iii) une seconde entrée et/ou sortie raccordée à une portion amont de la fibre optique et adaptée à des peignes différents de celui passant par la première entrée et/ou sortie, et
- son démultiplexeur et/ou multiplexeur est un démultiplexeur et/ou multiplexeur de bandes de manière à délivrer et/ou recevoir sur chacune de ses N sorties et/ou entrées des canaux dont les longueurs d'onde appartiennent à des ensembles distincts de P longueurs d'ondes, chacune d'entre elles appartenant à un peigne distinct parmi les P peignes disjoints.

Il est important de noter ici que les P peignes de longueurs d'onde disjoints (et donc distincts) sont ceux qui sont filtrés par les entrées et/ou sorties des entrelaceurs et/ou désentrelaceurs de longueurs d'onde.

Un tel réseau comprend au plus P stations de communication primaires raccordées à des entrelaceurs et/ou désentrelaceurs de longueurs d'onde de type 2x1.

Dans l'une ou l'autre déclinaison, le réseau peut comporter d'autres caractéristiques qui peuvent être prises séparément ou en combinaison, et notamment :
- l'un au moins des moyens de couplage peut être un coupleur optique d'insertion et/ou extraction, de type 2x1, et comprenant i) une sortie et/ou entrée raccordée à une portion aval de la fibre optique, ii) une première entrée et/ou sortie raccordée à l'une des stations (qui est alors dite « secondaire »), et iii) une seconde entrée et/ou sortie raccordée à une portion amont de la fibre optique;
- lorsque la fibre optique est de type monodirectionnel montante, le démultiplexeur et/ou multiplexeur est un démultiplexeur comportant une entrée et N sorties, et les stations de communication peuvent comporter chacune au moins un dispositif d'émission de multiplex raccordé à un coupleur optique, lui-même raccordé à l'un des moyens de couplage ou bien directement à la fibre optique ;
- dans une première variante, lorsque la fibre optique est de type monodirectionnel descendante, le démultiplexeur et/ou multiplexeur est un multiplexeur comportant une sortie et N entrées, et les stations de communication peuvent comporter chacune au moins un dispositif de réception de multiplex raccordé à un moyen d'aiguillage, lui-même raccordé à l'un des moyens de couplage ou bien directement à la fibre optique ;
- dans une deuxième variante, lorsque la fibre optique est de type bidirectionnel, le démultiplexeur et/ou multiplexeur est un démultiplexeur/multiplexeur comportant une entrée/sortie et N sorties/entrées, et les stations de communication peuvent comporter chacune au moins un dispositif d'émission de multiplex raccordé à un coupleur optique, au moins un dispositif de réception de multiplex raccordé à des moyens d'aiguillage, et un circulateur optique couplé à l'un des moyens de couplage (ou bien directement à la fibre optique) et aux moyens d'aiguillage et au coupleur optique ;
- dans une deuxième variante, le réseau peut comporter i) une première fibre optique de type monodirectionnel descendante, raccordée à un multiplexeur comportant une sortie et N entrées, ii) une seconde fibre optique de type monodirectionnel montante, raccordée à un démultiplexeur comportant une entrée et N sorties, et des stations de communication pouvant comporter chacune au moins un dispositif d'émission de multiplex, raccordé à un coupleur optique, lui-même raccordé à la seconde fibre optique ou à l'un des moyens de couplage raccordés à la seconde fibre optique, et au moins un dispositif de réception de multiplex, raccordé à un moyen d'aiguillage, lui-même raccordé à l'un des moyens de couplage raccordés à la première fibre optique, ou bien directement à cette première fibre optique ;
- les moyens d'aiguillage peuvent par exemple se présenter sous la forme d'un démultiplexeur ou d'un commutateur à sélection de longueurs d'onde.

L'invention est bien adaptée, bien que de façon non exclusive, aux réseaux optiques (D)WDM en anneau ou à structure en bus.

D'autres caractéristiques et avantages de l'invention apparaîtront à l'examen de la description détaillée ci-après, et des dessins annexés, sur lesquels :
- la figure 1 illustre de façon très schématique un exemple de réalisation d'un réseau de communication en anneau raccordé à un réseau fédérateur,
- la figure 2 illustre de façon schématique un exemple de réalisation d'une partie d'un réseau optique selon l'invention, équipé d'une fibre monodirectionnelle montante,
- la figure 3 illustre de façon schématique un exemple de réalisation d'une partie d'un réseau optique selon l'invention, équipé d'une fibre monodirectionnelle descendante, et
- la figure 4 illustre de façon schématique un exemple de réalisation d'une partie d'un réseau optique selon l'invention, équipé d'une fibre bidirectionnelle.

Les dessins annexés pourront non seulement servir à compléter l'invention, mais aussi contribuer à sa définition, le cas échéant.

L'invention a pour objet de permettre l'optimisation de l'architecture d'un réseau optique à multiplexage de longueurs d'onde (ou (D)WDM pour « (Dense) Wavelength Division Multiplexing ») dans le but d'améliorer ses performances (en termes de capacité et/ou d'économie de puissance), si possible sans en augmenter le coût.

Dans ce qui suit, on considère, à titre d'exemple illustratif, que le réseau optique est un réseau dit « en mode circuit », comme par exemple un réseau d'accès métropolitain de télécommunications. Mais, l'invention n'est pas limitée à cette seule application. Par ailleurs, le réseau optique peut être un réseau en anneau, mais cela n'est pas obligatoire. L'invention s'applique en effet à d'autres types de réseau optique, et notamment aux réseaux optiques à structure en bus.

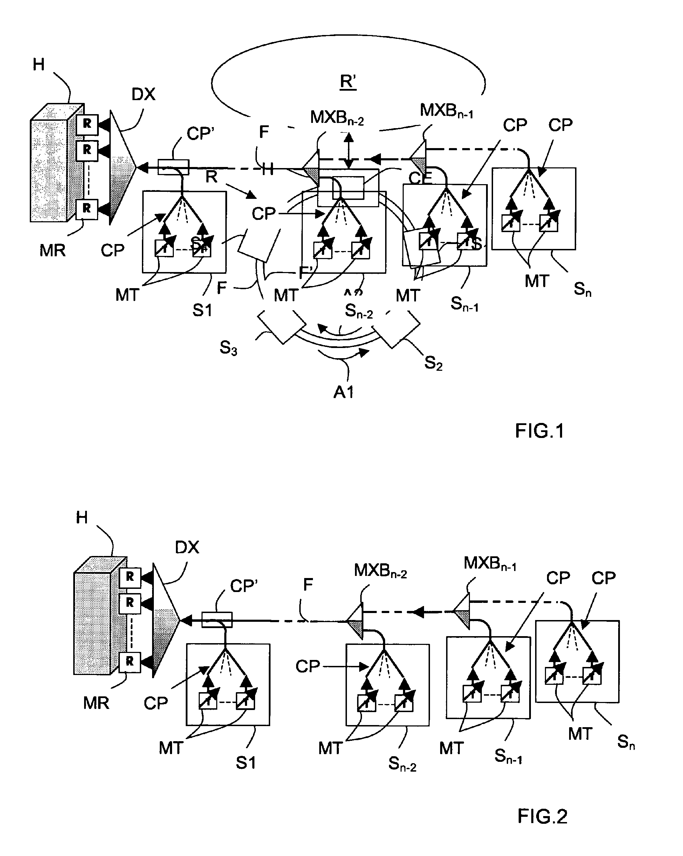

On a représenté sur la figure 1 un réseau en anneau R. Un tel réseau R comporte, classiquement, un noeud d'accès (ou « hub », ou encore point de présence) H, auquel est raccordée l'une au moins des deux extrémités de fibres optiques F, F' destinées à la transmission de données sous forme de signaux optiques, et plusieurs stations d'utilisateurs Si (ici, l'indice i est compris entre 1 et 4, mais il peut prendre n'importe quelle valeur supérieure ou égale à deux (2)), couplées optiquement aux fibres F, F', via des moyens de couplage qui seront décrits plus loin en référence aux figures 2 à 4.

Le réseau en anneau R est généralement raccordé à un autre réseau R', dit « fédérateur » (ou « backbone »), via le noeud d'accès H.

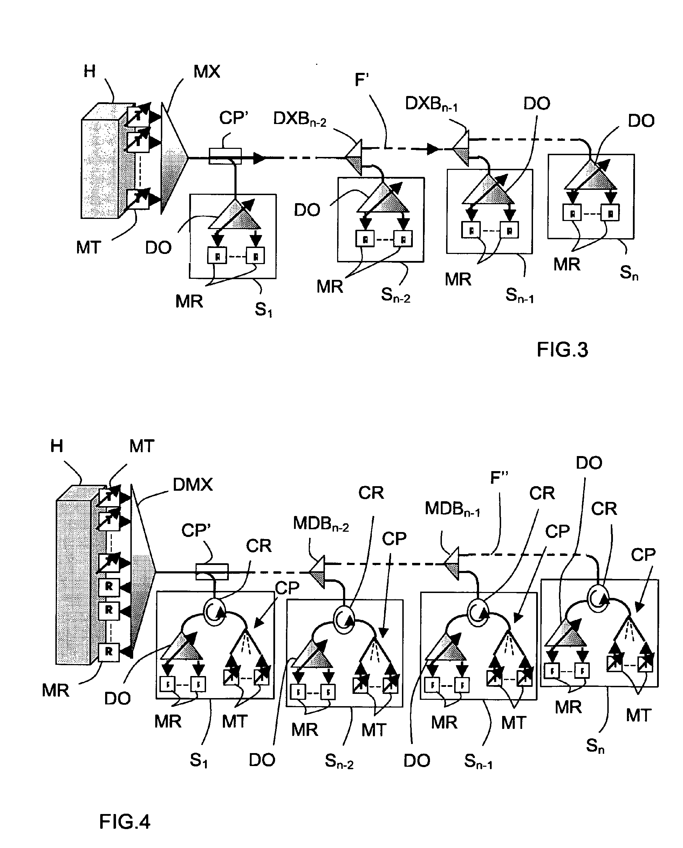

Le réseau R comporte par exemple une première fibre optique de transmission F de type monodirectionnel montante, dédiée au trafic montant des stations Si vers le noeud d'accès H (flèche A1), et une seconde fibre optique de transmission F' de type monodirectionnel descendante, dédiée au trafic descendant du noeud d'accès H vers les stations Si (flèche A2). Mais, comme on le verra plus loin en référence à la figure 4, on peut envisager un réseau R simplifié dans lequel on ne prévoit qu'une unique fibre, de type bidirectionnel, dédiée aux deux types de trafic (montant et descendant).

Par ailleurs, on peut également envisager que le réseau R comporte au moins une autre fibre optique dédiée à la protection du trafic en cas de défaillance survenue sur les première F et seconde F' fibres optiques (ou sur l'unique fibre optique bidirectionnelle).

Le noeud d'accès H, qui est de préférence de type électronique, comporte des moyens de mémorisation, tels que des mémoires électroniques, destinés à mémoriser le trafic, au moins de façon temporaire, et un commutateur électronique CE, de type Ethernet ou IP, équipé de moyens de conversion de type O/E/O (« Optique / Electrique / Optique ») de façon à pouvoir accéder à l'intégralité du trafic circulant dans le réseau (ici en anneau). Un tel commutateur électronique CE est généralement appelé « concentrateur ».

On se réfère maintenant à la figure 2 pour décrire en détail la partie dédiée au trafic montant au sein d'un exemple de réseau optique selon l'invention dans lequel les trafics montant et descendant empruntent des fibres optiques différentes F et F'.

La fibre optique montante F est raccordée, d'une part, à l'entrée d'un démultiplexeur DX comportant par ailleurs N sorties raccordées chacune à un module de réception MR du noeud d'accès (ou hub) H, et d'autre part, à des stations de communication Si comportant des modules d'émission (ou transmission) MT pouvant délivrer des multiplex spectraux de signaux optiques modulés de différentes longueurs d'onde, par l'intermédiaire de moyens de couplage sur lesquels on reviendra plus loin.

Par exemple, chaque station Si comporte au moins un module d'émission MT, et par exemple quatre. Chaque module d'émission MT comporte des sources comprenant au moins un générateur, par exemple accordable en longueur d'onde et délivrant une lumière selon au moins une longueur d'onde, et un modulateur alimenté par un circuit électronique et chargé de moduler cette lumière afin de délivrer des signaux optiques modulés sur sa sortie. Les générateurs sont par exemple des lasers accordables en longueur d'onde. Mais, il pourrait également s'agir de lasers à longueurs d'onde fixes. Chaque source comporte en outre des moyens permettant de contrôler ses sorties de manière à délivrer des signaux optiques selon des longueurs d'onde choisies.

Chaque module d'émission MT est raccordé à l'une des entrées d'un coupleur optique (passif) CP dont la sortie est raccordée directement à la fibre optique F ou à un moyen de couplage CP' ou MXBi afin de l'alimenter en multiplex spectraux constitués des signaux optiques modulés de différentes longueurs d'onde délivrés par les sources.

Les moyens de couplage MXBi utilisés dépendent, notamment, du type du démultiplexeur DX qui est raccordé au noeud d'accès H.

Deux modes de réalisation peuvent être envisagés.

Dans un premier mode de réalisation, les modules de traitement MT des stations de communication Si sont chargés de délivrer des multiplex spectraux de signaux optiques modulés appartenant à une bande de longueurs d'onde donnée parmi P disjointes (c'est-à-dire qui ne se recouvrent pas deux à deux).

On entend ici par « bande de longueurs d'onde » un ensemble de longueurs d'onde qui se suivent et qui vont subir un même traitement optique.

Dans ce premier mode de réalisation le démultiplexeur DX est de type périodique. Il définit N canaux logiques virtuels associés chacun à l'une de ses N sorties et à tous les canaux WDM sortant par cette sortie. Par conséquent, des stations de communication Si peuvent partager un même canal logique virtuel en émettant leurs signaux optiques sur des canaux optiques de différentes longueurs d'onde sachant qu'une sortie du démultiplexeur DX ne doit recevoir à un instant donné qu'un canal physique appartenant à la classe (ou canal logique virtuel) associé(e).

Lorsque le démultiplexeur DX est de type périodique, un « canal logique virtuel » est une classe regroupant les canaux physiques dont les fréquences optiques sont espacées d'un nombre entier de fois la période spectrale du démultiplexeur DX.

En d'autres termes, le démultiplexeur DX délivre sur chacune de ses N sorties des canaux dont les longueurs d'onde appartiennent à des ensembles (ou peignes) distincts de P longueurs d'ondes, qui chacune d'entre elles appartiennent à une bande distincte parmi les P bandes disjointes.

Si la fibre montante F supporte M canaux physiques (ou longueurs d'onde), et que le nombre de sorties du démultiplexeur DX (et donc le nombre de canaux logiques virtuels qu'il définit) est égal à N, alors le nombre de bandes P supporté par la fibre montante F est égal à M/N, et chacun des N canaux logiques virtuels comprend P canaux physiques différents appartenant respectivement aux P bandes différentes.

Par exemple, si M est égal à 80 et N est égal à 16, alors P est égal à 80/16, soit 5, et chaque canal logique virtuel comprend 5 canaux physiques différents appartenant respectivement aux 5 bandes différentes. On peut alors organiser le réseau de sorte qu'à chaque instant le démultiplexeur DX délivre sur ses 16 sorties l'une des 5 longueurs d'onde (des 5 différentes bandes) de chacun des 16 canaux logiques virtuels.

Il est important de noter que la périodicité peut être simple ou bien cyclique. La périodicité simple correspond à la périodicité de la fonction de filtrage dans le domaine des fréquences optiques. La périodicité cyclique est un cas particulier de périodicité simple. Elle apparaît lorsque l'écart spectral entre le dernier canal d'un ordre de la fonction de filtrage et le premier canal de l'ordre suivant est égal à l'écart spectral entre les canaux d'un même ordre.

Lorsque la périodicité est simple, le démultiplexeur DX peut par exemple se présenter sous la forme d'un dispositif de diffraction de longueurs d'onde en réseau de type AWG (pour « Arrayed Wavelength Grating »). Lorsque la périodicité est cyclique, le démultiplexeur DX peut par exemple se présenter sous la forme d'un AWG ou d'une cascade de désentrelaceurs (« de-interleavers »).

Dans ce premier mode de réalisation, on appelle station « primaire » une station de communication Si qui est raccordée à un moyen de couplage MXBi se présentant sous la forme d'un multiplexeur de bandes de type 2x1 et qui peut utiliser une bande de longueurs d'onde parmi P disjointes.

Dans un réseau comportant une fibre F supportant P bandes, il ne peut donc pas y avoir plus de P stations primaires raccordées à cette fibre F.

Lorsqu'une station de communication Si n'est pas raccordée à la fibre F par un multiplexeur de bandes MXBi, elle est dite « secondaire ». C'est par exemple le cas des stations S1 et Sn dans l'exemple illustré.

Lorsque m stations secondaires sont raccordées à la fibre F, elles utilisent une même bande parmi les P. Par conséquent, P-1 bandes restent à la disposition de P-1 stations primaires (raccordées à cette même fibre F). Préférentiellement, les P-1 stations les plus éloignées du noeud d'accès H, hormis la dernière Sn lorsqu'elle est de type secondaire (comme illustré), sont de type primaire.

Chaque multiplexeur de bandes MXBi comprend une sortie raccordée à une portion dite « aval » de la fibre montante F, une première entrée raccordée à la station primaire associée et adaptée à la bande de longueurs d'onde de cette dernière, et une seconde entrée raccordée à une portion dite « amont » de la fibre montante F et adaptée à des canaux dont les longueurs d'onde sont différentes de celles des canaux passant par la première entrée. Les notions « amont » et « aval » font référence à des positions par rapport au noeud d'accès H qui est placé le plus en aval de la fibre montante F. Par conséquent, chaque multiplexeur de bandes MXBi combine les multiplex spectraux, appartenant à la bande de longueurs d'onde de la station primaire Si à laquelle il est raccordé, avec les multiplex spectraux appartenant aux bandes de longueurs d'onde des stations primaires Si+m (m≥1) placées en amont.

Dans l'exemple illustré sur la figure 2 les stations primaires référencées Sn-1 et Sn-2 sont raccordées à la fibre montante F par un multiplexeur de bandes de longueurs d'onde. La dernière station Sn, placée à l'extrémité amont de la fibre montante F, est raccordée à cette dernière par l'intermédiaire de son coupleur optique passif CP qui est raccordé à ses modules d'émission MT. Elle est donc, dans cet exemple, de type secondaire. Par ailleurs, les autres stations (ici S1), placées à l'extrémité aval de la fibre montante F, sont raccordées à cette dernière par l'intermédiaire d'un coupleur optique CP' de type 2x1 à rapport de couplage (par exemple 10% / 90%). Elles sont donc également, dans cet exemple, de type secondaire.

Par exemple, dans le cas d'un réseau R comportant huit stations de communication Si les cinq les plus éloignées du noeud d'accès S3 à S7, hormis la dernière S8, sont raccordées à la fibre montante F par un multiplexeur MBXi, et sont donc de type primaire, tandis que les deux les plus proches du noeud d'accès S1 et S2 ainsi que la plus éloignée S8 sont raccordées à la fibre montante F par un coupleur optique CP' ou bien directement, et sont donc de type secondaire.

Dans un second mode de réalisation, les modules d'émission MT de l'une au moins des stations de communication primaires Si sont chargés de délivrer des multiplex spectraux de signaux optiques modulés appartenant à un peigne de longueurs d'onde donné parmi P disjoints (c'est-à-dire qui ne se recouvrent pas deux à deux).

On entend ici par « peigne de longueurs d'onde » un ensemble de signaux optiques dont les fréquences optiques des porteuses sont régulièrement espacées.

Dans ce second mode de réalisation le démultiplexeur DX est un démultiplexeur de bandes. Il définit N canaux logiques virtuels, associés chacun à l'une de ses N sorties et aux longueurs d'onde de la bande associée à cette sortie, et délivre donc sur chacune de ses N sorties l'une des longueurs d'onde du canal logique virtuel (et donc de la bande) qui lui est associé(e).

En d'autres termes, le démultiplexeur DX délivre sur chacune de ses N sorties des canaux dont les longueurs d'onde appartiennent à des ensembles distincts de P longueurs d'ondes, qui chacune d'entre elles appartiennent à un peigne distinct parmi les P peignes disjoints.

Dans chaque peigne l'écart entre deux longueurs d'onde successives est au moins égal à l'écart entre bandes à l'entrée du démultiplexeur de bandes DX.

Si la fibre montante F supporte M canaux physiques (ou longueurs d'onde), et que le nombre de sorties du démultiplexeur de bandes DX (et donc le nombre de canaux logiques virtuels qu'il définit) est égal à N, alors le nombre de peignes P supporté par la fibre montante F est égal à M/N, et chacun des N canaux logiques virtuels comprend P canaux physiques différents appartenant respectivement aux P peignes différents.

Par exemple, si M est égal à 80 et N est égal à 16, alors P est égal à 80/16, soit 5, et chaque canal logique virtuel comprend 5 canaux physiques différents appartenant respectivement aux 5 peignes différents. On peut alors organiser le réseau de sorte qu'à chaque instant le démultiplexeur de bandes DX délivre sur ses 16 sorties l'une des 5 longueurs d'onde (des 5 différents peignes) de chacun des 16 canaux logiques virtuels.

Dans ce second mode de réalisation, les stations primaires Si (qui sont de préférence celles qui sont les plus éloignées du noeud d'accès H, hormis éventuellement la dernière Sn lorsqu'elle est placée à l'extrémité de la fibre montante F), sont raccordées à un moyen de couplage MXBi se présentant sous la forme d'un entrelaceur (« interleaver ») de type 2x1.

Chaque entrelaceur MXBi comprend une sortie raccordée à une portion aval de la fibre montante F, une première entrée raccordée à la station primaire associée et adaptée au peigne de longueurs d'onde de cette dernière, et une seconde entrée raccordée à une portion amont de la fibre montante F et adaptée à des canaux dont les longueurs d'onde sont différentes de celles des canaux passant par la première entrée. Par conséquent, chaque entrelaceur MXBi combine les multiplex spectraux, appartenant au peigne de longueurs d'onde de la station primaire Si à laquelle il est raccordé, avec les multiplex spectraux appartenant aux peignes de longueurs d'onde des stations primaires Si+m (m≥1) placées en amont.

Comme dans le premier mode de réalisation la dernière station Sn, placée à l'extrémité amont de la fibre montante F, est raccordée à cette dernière par l'intermédiaire de son coupleur optique passif CP. Elle est donc de type secondaire tout comme les autres stations qui sont placées près de l'extrémité aval de la fibre montante F et qui sont raccordées à cette dernière par l'intermédiaire d'un coupleur optique CP' de type 2x1 à rapport de couplage (par exemple 10% / 90%).

On se réfère maintenant à la figure 3 pour décrire en détail la partie dédiée au trafic descendant au sein d'un exemple de réseau optique selon l'invention dans lequel les trafics montant et descendant empruntent des fibres optiques différentes F et F'.

La fibre optique descendante F' est raccordée, d'une part, à la sortie d'un multiplexeur MX comportant par ailleurs N entrées raccordées chacune à un module d'émission MT du noeud d'accès (ou hub) H, et d'autre part, aux stations de communication Si qui comportent des modules de réception MR pouvant recevoir des multiplex spectraux de signaux optiques modulés de différentes longueurs d'onde, par l'intermédiaire de moyens de couplage sur lesquels on reviendra plus loin.

Chaque module de réception MR est raccordé à l'une des sorties d'un démultiplexeur optique fixe ou d'un commutateur à sélection de longueurs d'onde DO dont l'entrée est raccordée directement à la fibre optique F' ou à un moyen de couplage CP' ou DXBi afin d'être alimentée en multiplex spectraux constitués des signaux optiques modulés appartenant à la bande ou au peigne de longueurs d'onde de sa station Si.

Par exemple, chaque station Si comporte au moins un module de réception MR, et par exemple quatre. Chaque module de réception MR comporte un circuit de traitement alimentant une sortie, par exemple couplée à un terminal.

Le circuit de traitement comprend un récepteur muni d'une entrée alimentée en canaux optiques isolés (et donc filtrés) par l'une des sorties du démultiplexeur optique fixe ou du commutateur à sélection de longueurs d'onde DO, et chargé de convertir en signaux électriques les signaux optiques qui présentent la longueur d'onde sélectionnée afin qu'ils puissent être traités.

Comme dans le cas de la fibre montante F, les moyens de couplage DXBi utilisés dépendent, notamment, du type du multiplexeur MX qui est raccordé au noeud d'accès H. En raison du principe de retour inverse de la lumière les deux modes de réalisation décrits précédemment s'appliquent également ici.

Par conséquent, dans le premier mode de réalisation chaque station de communication Si est chargée de recevoir des multiplex spectraux de signaux optiques modulés appartenant à une bande de longueurs d'onde donnée parmi P disjointes. Par ailleurs, le multiplexeur MX est de type périodique. Il définit également N canaux logiques virtuels, associés chacun à l'une de ses N entrées et à des longueurs d'onde appartenant à des bandes de longueurs d'ondes différentes, et ne doit recevoir à un instant donné sur chaque entrée qu'un canal physique appartenant à la classe (ou canal logique virtuel) associé(e).

En d'autres termes, le multiplexeur MX reçoit sur chacune de ses N entrées des canaux dont les longueurs d'onde appartiennent à des ensembles (ou peignes) distincts de P longueurs d'ondes, qui chacune d'entre elles appartiennent à une bande distincte parmi les P bandes disjointes.

Si la fibre descendante F' supporte M canaux physiques (ou longueurs d'onde), et que le nombre d'entrées du multiplexeur MX (et donc le nombre de canaux logiques virtuels qu'il définit) est égal à N, alors le nombre de bandes P supporté par la fibre descendante F' est égal à M/N, et chacun des N canaux logiques virtuels comprend P canaux physiques différents appartenant respectivement aux P bandes différentes.

De nouveau la périodicité peut être simple ou bien cyclique. Lorsque la périodicité est simple, le multiplexeur MX peut par exemple se présenter sous la forme d'un AWG. Lorsque la périodicité est cyclique, le multiplexeur MX peut par exemple se présenter sous la forme d'un AWG ou d'une cascade d'entrelaceurs (« interleavers »).

Dans ce premier mode de réalisation, au moins les stations primaires Si (qui sont de préférence celles qui sont les plus éloignées du noeud d'accès H, hormis éventuellement la dernière Sn lorsqu'elle est placée à l'extrémité de la fibre descendante F'), sont raccordées à un moyen de couplage DXBi se présentant sous la forme d'un démultiplexeur de bandes de type 2x1, du type du multiplexeur de bandes MXBi décrit précédemment en référence à la figure 2.

Chaque démultiplexeur de bandes DXBi comprend une entrée raccordée à une portion aval de la fibre descendante F', une première sortie raccordée à la station primaire Si associée et adaptée à la bande de longueurs d'onde de cette dernière, et une seconde sortie raccordée à une portion amont de la fibre descendante F' et adaptée à des canaux dont les longueurs d'onde sont différentes de celles des canaux passant par la première sortie. Les notions amont et aval font référence à des positions par rapport à l'extrémité amont de la fibre descendante F' qui n'est pas raccordée au noeud d'accès H. Par conséquent, chaque démultiplexeur de bandes DXBi sépare les multiplex spectraux, appartenant à la bande de longueurs d'onde de la station Si à laquelle il est raccordé, des multiplex spectraux appartenant aux bandes de longueurs d'onde des stations Si+m (m≥1) placées en amont.

Dans l'exemple illustré sur la figure 3 les démultiplexeurs optiques fixes ou les commutateurs à sélection de longueurs d'onde DO des stations primaires référencées Sn-1 et Sn-2 sont raccordés à la fibre descendante F' par un démultiplexeur de bandes de longueurs d'onde DXBn-1 et DXBn-2. La dernière station Sn, placée à l'extrémité amont de la fibre descendante F' (opposée au noeud d'accès H), est raccordée à cette dernière par l'intermédiaire de son démultiplexeur optique fixe ou de son commutateur à sélection de longueurs d'onde DO qui est raccordé à ses modules de réception MR. Elle est donc, dans cet exemple, de type secondaire. Par ailleurs, les démultiplexeurs optiques fixes ou les commutateurs à sélection de longueurs d'onde DO des autres stations (ici S1), placées près de l'extrémité aval de la fibre descendante F' (côté noeud d'accès H), sont raccordés à cette dernière par l'intermédiaire d'un coupleur optique CP' de type 2x1 à rapport de couplage (par exemple 10% / 90%). Elles sont donc également, dans cet exemple, de type secondaire.

Par exemple, dans le cas d'un réseau R comportant huit stations de communication Si les cinq les plus éloignées du noeud d'accès S3 à S7, hormis la dernière S8, sont raccordées à la fibre descendante F' par un démultiplexeur DXBi, et sont donc de type primaire, tandis que les deux les plus proches du noeud d'accès S1 et S2 ainsi que la plus éloignée S8 sont raccordées à la fibre descendante F' par un coupleur optique CP' ou bien directement, et sont donc de type secondaire.

Dans un second mode de réalisation, les modules de réception MR de l'une au moins des stations de communication primaires Si sont chargés de recevoir des multiplex spectraux de signaux optiques modulés appartenant à un peigne de longueurs d'onde donné parmi P disjoints.

Par ailleurs, le multiplexeur MX est un multiplexeur de bandes. Il définit toujours N canaux logiques virtuels, associés chacun à l'une de ses N entrées et à des longueurs d'onde appartenant à la bande associée à cette entrée, et alimente chacune de ses N entrées avec l'une des longueurs d'onde du canal logique virtuel (et donc de la bande) qui lui est associé(e).

En d'autres termes, le multiplexeur MX reçoit sur chacune de ses N entrées des canaux dont les longueurs d'onde appartiennent à des ensembles distincts de P longueurs d'ondes, qui chacune d'entre elles appartiennent à un peigne distinct parmi les P peignes disjoints.

Dans chaque peigne l'écart entre deux longueurs d'onde successives est au moins égal à l'écart entre bandes à la sortie du multiplexeur de bandes MX.

Si la fibre descendante F' supporte M canaux physiques (ou longueurs d'onde), et que le nombre d'entrées du multiplexeur de bandes MX (et donc le nombre de canaux logiques virtuels qu'il définit) est égal à N, alors le nombre de peignes P supporté par la fibre descendante F' est égal à M/N, et chacun des N canaux logiques virtuels comprend P canaux physiques différents appartenant respectivement aux P peignes différents.

Par exemple, si M est égal à 80 et N est égal à 16, alors P est égal à 80/16, soit 5, et chaque canal logique virtuel comprend 5 canaux physiques différents appartenant respectivement aux 5 peignes différents. On peut alors organiser le réseau de sorte qu'à chaque instant le multiplexeur de bandes MX délivre sur ses 16 sorties l'une des 5 longueurs d'onde (des 5 différents peignes) de chacun des 16 canaux logiques virtuels. Dans ce second mode de réalisation, au moins les démultiplexeurs optiques fixes ou les commutateurs à sélection de longueurs d'onde DO des stations primaires Si (qui sont de préférence celles qui sont les plus éloignées du noeud d'accès H, hormis éventuellement la dernière Sn lorsqu'elle est placée à l'extrémité de la fibre descendante F'), sont raccordés à un moyen de couplage DXBi se présentant sous la forme d'un désentrelaceur (« de-interieaver ») de type 2x1.

Chaque désentrelaceur DXBi comprend une entrée raccordée à une portion aval de la fibre descendante F', une première sortie raccordée à la station primaire Si associée et adaptée au peigne de longueurs d'onde de cette dernière, et une seconde sortie raccordée à une portion amont de la fibre descendante F' et adaptée à des canaux dont les longueurs d'onde sont différentes de celles des canaux passant par la première sortie. Par conséquent, chaque désentrelaceur DXBi sépare les multiplex spectraux, appartenant au peigne de longueurs d'onde de la station primaire Si à laquelle il est raccordé, des multiplex spectraux appartenant aux peignes de longueurs d'onde des stations Si+m (m≥1) placées en amont.

Comme dans le premier mode de réalisation la dernière station Sn, placée à l'extrémité amont de la fibre descendante F', est raccordée à cette dernière par l'intermédiaire de son démultiplexeur optique fixe ou son commutateur à sélection de longueurs d'onde DO. Elle est donc, dans cet exemple, de type secondaire. Par ailleurs, les démultiplexeurs optiques fixes ou les commutateurs à sélection de longueurs d'onde DO des autres stations placées à l'extrémité aval de la fibre descendante F', sont raccordées à cette dernière par l'intermédiaire d'un coupleur optique CP' de type 2x1 à rapport de couplage (par exemple 10% / 90%). Ces autres stations sont donc également, dans cet exemple, de type secondaire.

On se réfère maintenant à la figure 4 pour décrire en détail un exemple de réseau optique selon l'invention dans lequel les trafics montant et descendant empruntent une unique fibre optique bidirectionnelle F".

Cet exemple de réalisation est en quelque sorte une combinaison des exemples décrits précédemment en référence aux figures 2 et 3.

Les stations de communication Si comportent des modules d'émission MT et des modules de réception MR tels que ceux décrits ci-avant, raccordés respectivement à des coupleurs optiques passifs CP et des multiplexeurs/démultiplexeurs optiques fixes ou des commutateurs à sélection de longueurs d'onde DO.

On prévoit en outre, au niveau de chaque station de communication Si, un circulateur CR comprenant une entrée/sortie, raccordée soit directement à la fibre optique F" dans le cas de la station secondaire Sn la plus éloignée du noeud d'accès H, soit à un coupleur optique CP' de type 2x1 à rapport de couplage (par exemple 10% / 90%) pour les stations secondaires les plus proches du noeud d'accès H (ici S1), soit encore à un multiplexeur/démultiplexeur MDBi pour les stations primaires (ici Sn-1 et Sn-2).

Par ailleurs, le noeud d'accès H comprend des modules de réception MR et des modules d'émission MT raccordés aux sorties/entrées d'un démultiplexeur/multiplexeur DMX dont l'entrée/sortie est raccordée à l'extrémité aval de la fibre optique bidirectionnelle F".

Comme dans le cas de la fibre montante F et de la fibre descendante F', les moyens de couplage MDBi utilisés dépendent, notamment, du type du démultiplexeur/multiplexeur DMX qui est raccordé au noeud d'accès H.

Dans le premier mode de réalisation, chaque station de communication primaire Si est chargée d'émettre et de recevoir des multiplex spectraux de signaux optiques modulés appartenant à une bande de longueurs d'onde donnée parmi P disjointes. Par ailleurs, le démultiplexeur/multiplexeur DMX est de type périodique. Il définit également N canaux logiques virtuels, associés chacun à l'une de ses N sorties/entrées et à des longueurs d'onde appartenant à des bandes de longueurs d'ondes différentes, et délivre sur chacune de ses N sorties/entrées l'une des longueurs d'onde du canal logique virtuel qui lui est associé.

Si la fibre F" supporte M canaux physiques (ou longueurs d'onde), et que le nombre de sorties/entrées du démultiplexeur/multiplexeur DMX (et donc le nombre de canaux logiques virtuels qu'il définit) est égal à N, alors le nombre de bandes P supporté par la fibre F" est égal à M/N, et chacun des N canaux logiques virtuels comprend P canaux physiques différents appartenant respectivement aux P bandes différentes. Il est important de noter que les P bandes doivent ici être réparties entre les trafics montant et descendant.

De nouveau la périodicité peut être simple ou bien cyclique. Lorsque la périodicité est simple, le démultiplexeur/multiplexeur DMX peut par exemple se présenter sous la forme d'un AWG. Lorsque la périodicité est cyclique, le démultiplexeur/multiplexeur DMX peut par exemple se présenter sous la forme d'un AWG ou d'une cascade de désentrelaceurs/entrelaceurs (« de-interleavers/interleavers »).

Dans ce premier mode de réalisation, au moins les stations primaires Si (qui sont de préférence celles qui sont les plus éloignées du noeud d'accès H, hormis éventuellement la dernière Sn lorsqu'elle est placée à l'extrémité de la fibre F"), sont raccordées à un moyen de couplage MDBi se présentant sous la forme d'un multiplexeur/démultiplexeur de bandes de type 2x1, du type du multiplexeur de bandes MXBi décrit précédemment en référence à la figure 2 ou du démultiplexeur de bandes DXBi décrit précédemment en référence à la figure 3.

Chaque multiplexeur/démultiplexeur de bandes MDBi comprend une sortie/entrée raccordée à une portion aval de la fibre F", une première entrée/sortie raccordée à la station primaire Si associée et adaptée à la bande de longueurs d'onde de cette dernière, et une seconde entrée/sortie raccordée à une portion amont de la fibre F" et adaptée à des canaux dont les longueurs d'onde sont différentes de celles des canaux passant par la première sortie. Les notions amont et aval font référence à des positions par rapport à l'extrémité amont de la fibre F" qui n'est pas raccordée au noeud d'accès H. Par conséquent, chaque multiplexeur/démultiplexeur de bandes MDBi combine ou sépare les multiplex spectraux, appartenant à la bande de longueurs d'onde de la station primaire Si à laquelle il est raccordé, avec les ou des multiplex spectraux appartenant aux bandes de longueurs d'onde des stations primaires Si+m (m≥1) placées en amont.

Par exemple, dans le cas d'un réseau R comportant huit stations de communication Si les cinq les plus éloignées du noeud d'accès S3 à S7, hormis la dernière S8, sont raccordées à la fibre F" par un démultiplexeur/multiplexeur MDBi, et sont donc de type primaire, tandis que les deux les plus proches du noeud d'accès S1 et S2 ainsi que la plus éloignée S8 sont raccordées à la fibre F" par un coupleur optique CP' ou bien directement, et sont donc de type secondaire.

Dans un second mode de réalisation, chaque station de communication Si est chargée d'émettre et de recevoir des multiplex spectraux de signaux optiques modulés appartenant à un peigne de longueurs d'onde donné parmi P disjoints. Par ailleurs, le démultiplexeur/multiplexeur DMX est un démultiplexeur/multiplexeur de bandes. Il définit également N canaux logiques virtuels, associés chacun à l'une de ses N sorties/entrées. Chacune de ses N sorties/entrées délivre/reçoit l'une des longueurs d'onde du canal logique virtuel (et donc de la bande) qui lui est associé(e).

Si la fibre F" supporte M canaux physiques (ou longueurs d'onde), et que le nombre de sorties/entrées du démultiplexeur/multiplexeur DMX (et donc le nombre de canaux logiques virtuels qu'il définit) est égal à N, alors le nombre de peignes P supporté par la fibre F" est égal à M/N, et chacun des N canaux logiques virtuels comprend P canaux physiques différents appartenant respectivement aux P peignes différents. Il est important de noter que les P peignes doivent ici être répartis entre les trafics montant et descendant.

Par exemple, si M est égal à 80 et N est égal à 16, alors P est égal à 80/16, soit 5, et chaque canal logique virtuel comprend 5 canaux physiques différents appartenant respectivement aux 5 peignes différents. On peut alors organiser le réseau de sorte qu'à chaque instant le multiplexeur de bandes MX délivre sur ses 16 sorties l'une des 5 longueurs d'onde (des 5 différents peignes) de chacun des 16 canaux logiques virtuels. Dans ce second mode de réalisation, au moins les multiplexeurs/démultiplexeurs optiques fixes ou les commutateurs à sélection de longueurs d'onde DO des stations primaires Si (qui sont de préférence celles qui sont les plus éloignées du noeud d'accès H, hormis éventuellement la dernière Sn lorsqu'elle est placée à l'extrémité de la fibre F"), sont raccordés à un moyen de couplage MDBi se présentant sous la forme d'un entrelaceur/désentrelaceur (« interleaver/de-interleaver ») de type 2x1.

Chaque entrelaceur/désentrelaceur MDBi comprend une entrée/sortie raccordée à une portion aval de la fibre F", une première sortie/entrée raccordée à la station primaire Si associée et adaptée au peigne de longueurs d'onde de cette dernière, et une seconde sortie/entrée raccordée à une portion amont de la fibre F" et adaptée à des canaux dont les longueurs d'onde sont différentes de celles des canaux passant par la première sortie/entrée. Par conséquent, chaque entrelaceur/désentrelaceur MDBi combine ou sépare les multiplex spectraux, appartenant au peigne de longueurs d'onde de la station primaire Si à laquelle il est raccordé, avec les ou des multiplex spectraux appartenant aux peignes de longueurs d'onde des stations primaires Si+m (m≥1) placées en amont.

L'invention ne se limite pas aux modes de réalisation de réseau optique décrits ci-avant, seulement à titre d'exemple, mais elle englobe toutes les variantes que pourra envisager l'homme de l'art dans le cadre des revendications ci-après.

## Revendications

1. Réseau optique à multiplexage de longueurs d'onde (R), comprenant une fibre optique (F, F', F") raccordée à un noeud d'accès (H), par une entrée et/ou sortie de respectivement un démultiplexeur et/ou un multiplexeur (DX, MX, DMX) comprenant respectivement N sorties et/ou N entrées, et à des stations de communication (Sᵢ) propres à délivrer et/ou recevoir des multiplex spectraux de signaux optiques modulés de différentes longueurs d'onde, par des moyens de couplage (CP, CP', MXB, DXB, MDB), **caractérisé en ce que** lesdites stations de communication sont agencées pour délivrer et/ou recevoir des multiplex spectraux de signaux optiques modulés d'un ensemble de longueurs d'onde donnée parmi P ensembles disjointes, **en ce que** l'un au moins desdits moyens de couplage (MXB, DXB, MDB) est un multiplexeur et/ou démultiplexeur de longueurs d'onde de type 2x1 comprenant respectivement i) une sortie et/ou entrée raccordée à une portion dite aval de ladite fibre optique (F, F', F"), ii) une première entrée et/ou sortie raccordée à l'une desdites stations, alors dite primaire et adaptée à son ensemble de longueurs d'onde, et iii) une seconde entrée et/ou sortie raccordée à une portion dite amont de ladite fibre optique (F, F', F") et adaptée à des canaux dont les longueurs d'onde sont différentes de celles des canaux passant par ladite première entrée et/ou sortie, et **en ce que** ledit démultiplexeur et/ou multiplexeur (DX, MX, DMX), comprenant les N sorties et/ou N entrées, est de type périodique ou de bandes de manière à délivrer et/ou recevoir sur chacune de ses N sorties et/ou entrées des canaux dont les longueurs d'onde appartiennent à des ensembles distincts de P longueurs d'ondes, chacune d'entre elles appartenant à un ensemble distincte parmi lesdites P ensembles disjointes.

2. Réseau selon la revendication 1, **caractérisé en ce que** l'ensemble de longueurs d'onde sont est une bande de longueurs d'onde.

3. Réseau selon la revendication 1, **caractérisé en ce que** l'ensemble de longueurs d'onde sont est un peigne de signaux optiques, et le multiplexeur et/ou démultiplexeur de longueurs d'onde est un entrelaceur et/ou désentrelaceur de longueurs d'onde.

4. Réseau selon la revendication 2, **caractérisé en ce qu'**il comprend au plus P stations de communication primaires (Sₙ₋₁, Sₙ₋₂) raccordées à des multiplexeurs et/ou démultiplexeurs de bandes (MXB, DXB, MDB) de type 2x1.

5. Réseau selon l'une des revendications 2 et 4, **caractérisé en ce que** ledit démultiplexeur et/ou multiplexeur (MXB, DXB, MDB) est de type périodique cyclique.

6. Réseau selon la revendication 5, **caractérisé en ce que** ledit démultiplexeur et/ou multiplexeur périodique cyclique (MXB, DXB, MDB) est choisi dans un groupe comprenant les dispositifs de diffraction de longueurs d'onde en réseau de type Arrayed Wavelength Grating, AWG et les cascades de désentrelaceurs et/ou entrelaceurs.

7. Réseau selon la revendication 3, **caractérisé en ce qu'**il comprend au plus P stations de communication primaires (Sₙ₋₁, Sₙ₋₂) raccordées à des entrelaceurs et/ou désentrelaceurs de longueurs d'onde (MXB, DXB, MDB) de type 2x1.

8. Réseau selon l'une des revendications 1 à 7, **caractérisé en ce que** l'un au moins desdits moyens de couplage (CP') est un coupleur optique d'insertion et/ou extraction, de type 2x1, et comprend i) une première sortie et/ou entrée raccordées à une portion dite « aval » de ladite fibre optique (F, F', F"), ii) une première entrée et/ou sortie raccordée à l'une desdites stations (S₁), alors dite « secondaire », et iii) une seconde entrée et/ou sortie raccordée à une portion amont de ladite fibre optique (F, F', F").

9. Réseau selon l'une des revendications 1 à 6, **caractérisé en ce que** ladite fibre optique (F) est de type monodirectionnel montante, ledit démultiplexeur (DX) est un démultiplexeur comportant une entrée et N sorties, et lesdites stations de communication (Sᵢ) comportent chacune au moins un dispositif d'émission de multiplex (MT) raccordé à un coupleur optique (CP), lui-même couplé à l'un desdits moyens de couplage (CP', MXB, DXB, MDB) ou à ladite fibre (F).

10. Réseau selon l'une des revendications 1 à 8, **caractérisé en ce que** ladite fibre optique (F') est de type monodirectionnel descendante, ledit multiplexeur (MX) est un multiplexeur comportant une sortie et N entrées, et lesdites stations de communication (Sᵢ) comportent chacune au moins un dispositif de réception de multiplex (MR) raccordé à un moyen d'aiguillage (DO) lui-même couplé à l'un desdits moyens de couplage (CP', MXB, DXB, MDB) ou à ladite fibre (F).

11. Réseau selon l'une des revendications 1 à 8, **caractérisé en ce que** ladite fibre optique (F") est de type bidirectionnel, ledit démultiplexeur et/ou multiplexeur (DMX) est un démultiplexeur/multiptexeur comportant une entrée/sortie et N sorties/entrées, et lesdites stations de communication (Sᵢ) comportent chacune au moins un dispositif d'émission dé multiplex (MT) raccordé à un coupleur optique (CP), au moins un dispositif de réception de multiplex (MR) raccordé à des moyens d'aiguillage (DO), et un circulateur optique (CR) couplé à l'un desdits moyens de couplage (CP', MXB, DXB, MDB) ou à ladite fibre (F") et auxdits moyens d'aiguillage (DO) et coupleur optique (CP).

12. Réseau selon l'une des revendications 1 à 8, **caractérisé en ce qu'**il comprend i) une première fibre optique (F) de type monodirectionnel descendante, raccordée à un multiplexeur (MX) comportant une sortie et N entrées; ii) une seconde fibre optique (F') de type monodirectionnel montante, raccordée à un démultiplexeur (DX) comportant une entrée et N sorties, et **en ce que** lesdites stations de communication (Sᵢ) comportent chacune au moins un dispositif d'émission de multiplex (MT), raccordé à un coupleur optique (CP), lui-même couplé à l'un des moyens de couplage (CP', MXB, DXB, MDB) raccordés à ladite seconde fibre optique (F'), ou à ladite seconde fibre optique (F'), et au moins un dispositif de réception de multiplex (MR), raccordé à un moyen d'aiguillage (DO), lui-même raccordé à l'un des moyens de couplage CP', MXB, DXB, MDB), raccordés à ladite première fibre optique (F), ou à ladite première fibre optique (F).

13. Réseau selon l'une des revendications 10 à 12, **caractérisé en ce que** lesdits moyens d'aiguillage (DO) sont choisis dans un groupe comprenant un démultiplexeur et un commutateur à sélection de longueurs d'onde.

14. Réseau selon l'une des revendications 1 à 13, **caractérisé en ce qu'**il présente une structure en anneau.

## Claims

1. A wavelength division multiplex optical network (R), comprising an optical fiber (F, F', F") connected to a hub (H) via an input and/or output respectively of a demultiplexer and/or a multiplexer (DX, MX, DMX) having respectively N outputs and/or N inputs, and to communications stations (Sᵢ) able to deliver and/or receive spectral multiplexes of modulated optical signals with different wavelengths, via coupling means (CP, CP', MXB, DXB, MDB), the network being **characterized in that** said communications stations are adapted to deliver and/or receive spectral multiplexes of modulated optical signals from a given one of P disjoint sets of wavelengths, **in that** at least one of said coupling means (MXB, DXB, MDB) is a 2 × 1 wavelength multiplexer and/or demultiplexer comprising respectively i) an output and/or input connected to a so-called downstream portion of said optical fiber (F, F', F"), ii) a first input and/or output connected to one of said stations, then referred to as the primary station, and adapted to its set of wavelengths, and iii) a second input and/or output connected to an so-called upstream portion of said optical fiber (F, F', F") and adapted to channels of wavelengths different from the wavelengths of the channels passing through said first input and/or output, and **in that** said demultiplexer and/or multiplexer (DX, MX, DMX), comprising the N outputs and/or the N inputs, is of periodic type so as to deliver and/or receive at each of its N outputs and/or inputs channels of wavelengths that belong to distinct sets of P wavelengths each belonging to a distinct one of said P disjoint sets.

2. A network according to claim 1, **characterized in that** the set of wavelengths is a band of wavelengths.

3. A network according to claim 1, **characterized in that** the set of wavelengths is a comb of optical signals, and that the wavelength multiplexer and/or demultiplexer is a wavelength interleaver and/or de-interleaver.

4. A network according to claim 2, **characterized in that** it comprises at most P primary communications stations (Sₙ₋₁, Sₙ₋₂) connected to 2 × 1 band multiplexers and/or demultiplexers (MXB, DXB, MDB).

5. A network according to claim 2 or claim 4, **characterized in that** said multiplexers and/or demultiplexers (MXB, DXB, MDB) is of periodic cyclic type.

6. A network according to claim 5, **characterized in that** said periodic cyclic demultiplexer and/or multiplexer (MXB, DXB, MDB) is chosen in a group comprising Arrayed Wavelength Grating (AWG) wavelength diffraction devices and cascades of de-interleavers and/or interleavers.

7. A network according to claim 3, **characterized in that** it comprises at most P primary communications stations (Sₙ₋₁, Sₙ₋₂) connected to 2 × 1 wavelength interleavers and/or de-interleavers (MXB, DXB, MDB).

8. A network according to any one of claims 1 to 7, **characterized in that** at least one of said coupling means (CP') is a 2 × 1 add or drop optical coupler and has i) a first output and/or input connected to a "downstream" portion of said optical fiber (F, F', F"), ii) a first input and/or output connected to one of said stations (S₁), which is then referred to as the "secondary" station, and iii) a second input and/or output connected to an "upstream" portion of said optical fiber.

9. A network according to any one of claims 1 to 8, **characterized in that** said optical fiber (F) is of monodirectional upstream type, said demultiplexer (DX) is a demultiplexer having one input and N outputs, and said communications stations (Sᵢ) each include at least one multiplex sender device (MT) connected to an optical coupler (CP) itself coupled to one of said coupling means (CP', MXB, DXB, MDB) or to said fiber (F).

10. A network according to any one of claims 1 to 8, **characterized in that** said optical fiber (F') is of the monodirectional downstream type, said multiplexer (MX) is a multiplexer having one output and N inputs, and said communications stations (Sᵢ) each include at least one multiplex receiver device (MR) connected to switching means (DO) coupled to one of said coupling means (CP', MXB, DXB, MDB) or to said fiber (F').

11. A network according to any one of claims 1 to 8, **characterized in that** said optical fiber (F") is of bidirectional type, said demultiplexer and/or multiplexer (DMX) is a demultiplexer/multiplexer having one input/output and N outputs/inputs, and said communications stations (Sᵢ) each include at least one multiplex sender device (MT) connected to an optical coupler (CP), at least one multiplex receiver device (MR) connected to switching means (DO), and an optical circulator (CR) coupled to one of said coupling means (CP', MXB, DXB, MDB) or to said fiber (F") and to said switching means (DO) and said optical coupler (CP).

12. A network according to any one of claims 1 to 8, **characterized in that** it comprises i) a first output (F) of monodirectional downstream type, connected to a multiplexer (MX) having one output and N inputs, ii) a second optical fiber (F') of monodirectional upstream type, connected to a demultiplexer (DX) having one input and N outputs, and **in that** said communications stations (Sᵢ) each include at least one multiplex sender device (MT) connected to an optical coupler (CP), itself coupled to one of the coupling means (CP', MXB, DXB, MDB) connected to said second optical fiber (F') or to said second optical fiber (F'), and at least one multiplex receiver device (MR), either connected to switching means (DO), itself connected to one of the coupling means (CP' MXB, DXB, MDB) connected to said first optical fiber (F) or connected to said first optical fiber (F).

13. A network according to anyone of claims 10 to 12, **characterized in that** said switching means (DO) are chosen in a group comprising a demultiplexer and a wavelength selector switch.

14. A network according to any one of claims 1 to 13 **characterized in that** it has a ring structure.

## Patentansprüche

1. Optisches Netz mit Wellenlängenmultiplexierung (R), das eine Lichtleitfaser (F, F', F") aufweist, die mit einem Zugangsknoten (H) über einen Eingang und/oder Ausgang je eines Demultiplexers und/oder eines Multiplexers (DX, MX, DMX), die je N Ausgänge und/oder N Eingänge aufweisen, und mit Kommunikationsstationen (Sᵢ) verbunden ist, die geeignet sind, spektrale Multiplexe von modulierten optischen Signalen verschiedener Wellenlängen zu liefern und/oder zu empfangen, durch Kopplungsmittel (CP, CP', MXB, DXB, MDB), **dadurch gekennzeichnet, dass** die Kommunikationsstationen eingerichtet sind, um spektrale Multiplex von modulierten optischen Signalen einer gegebenen Einheit von Wellenlängen unter P getrennten Einheiten zu liefern und/oder zu empfangen, dass mindestens eines der Kopplungsmittel (MXB, DXB, MDB) ein Wellenlängen-Multiplexer und/oder -Demultiplexer vom Typ 2x1 ist, der je i) einen Ausgang und/oder Eingang, der an einen so genannten hinteren Abschnitt der Lichtleitfaser (F, F',' F") angeschlossen ist, ii) einen ersten Eingang und/oder Ausgang, der an eine der Stationen angeschlossen ist, die dann Primärstation genannt wird, und an ihre Einheit von Wellenlängen angepasst ist, und iii) einen zweiten Eingang und/oder Ausgang aufweist, der an einen so genannten vorderen Abschnitt der Lichtleitfaser (F, F', F") angeschlossen ist und an Kanäle angepasst ist, deren Wellenlängen sich von denjenigen der Kanäle unterscheiden, die über den ersten Eingang und/oder Ausgang gehen, und dass der Demultiplexer und/oder Multiplexer (DX, MX, DMX), der die N Ausgänge und/oder N Eingänge aufweist, vom periodischen Typ oder vom Typ mit Bändern ist, um an jedem seiner N Ausgänge und/oder Eingänge Kanäle zu liefern und/oder zu empfangen, deren Wellenlängen zu unterschiedlichen Einheiten von P Wellenlängen gehören, wobei jede von ihnen zu einer unterschiedlichen Einheit unter den P getrennten Einheiten gehört.

2. Netz nach Anspruch 1, **dadurch gekennzeichnet, dass** die Einheit von Wellenlängen ein Wellenlängen-Band ist.

3. Netz nach Anspruch 1, **dadurch gekennzeichnet, dass** die Einheit von Wellenlängen ein Kamm von optischen Signalen ist und der Wellenlängen-Multiplexer und/oder -Demultiplexer ein Wellenlängen-Interlacer und/oder Wellenlängen-Deinterlacer ist.

4. Netz nach Anspruch 2, **dadurch gekennzeichnet, dass** es höchstens P primäre Kommunikationsstationen (Sₙ₋₁, Sₙ₋₂) aufweist, die an Band-Multiplexer und/oder Band-Demultiplexer (MXB, DXB, MDB) vom Typ 2x1 angeschlossen sind.

5. Netz nach einem der Ansprüche 2 und 4, **dadurch gekennzeichnet, dass** der Demultiplexer und/oder Multiplexer (MXB, DXB, MDB) vom periodischen zyklischen Typ ist.

6. Netz nach Anspruch 5, **dadurch gekennzeichnet, dass** der periodische zyklische Demultiplexer und/oder Multiplexer (MXB, DXB, MDB) aus einer Gruppe ausgewählt wird, die die Vorrichtungen zur Wellenlängenbeugung im Netz vom Typ Arrayed Wavelength Grating AWG und die Kaskadenanordnungen von Deinterlacern und/oder Interlacern aufweist.

7. Netz nach Anspruch 3, **dadurch gekennzeichnet, dass** es höchstens P primäre Kommunikationsstationen (Sₙ₋₁, Sₙ₋₂) aufweist, die an Wellenlängen-Interlacer und/oder -Deinterlacer (MXB, DXB, MDB) vom Typ 2x1 angeschlossen sind.

8. Netz nach einem der Ansprüche 1 bis 7, **dadurch gekennzeichnet, dass** mindestens eines der Kopplungsmittel (CP') ein optischer Einfüge- und/oder Entnahmekoppler vom Typ 2x1 ist und i) einen ersten Ausgang und/oder Eingang, der an einen "hinteren" Abschnitt der Lichtleitfaser (F, F', F") angeschlossen ist, ii) einen ersten Eingang und/oder Ausgang, der an eine der Stationen (S₁) angeschlossen ist und dann "sekundär" genannt wird, und iii) einen zweiten Eingang und/oder Ausgang aufweist, der an einen vorderen Abschnitt der Lichtleitfaser (F, F', F") angeschlossen ist.

9. Netz nach einem der Ansprüche 1 bis 8, **dadurch gekennzeichnet, dass** die Lichtleitfaser (F) vom einseitig gerichteten aufsteigenden Typ ist, wobei der Demultiplexer (DX) ein Demultiplexer ist, der einen Eingang und N Ausgänge aufweist, und die Kommunikationsstationen (Sᵢ) je mindestens eine Multiplex-Sendevorrichtung (MT) aufweisen, die an einen optischen Koppler (CP) angeschlossen ist, der selbst an eines der Kopplungsmittel {CP', MXB, DXB, MDB) oder an die Faser (F) angeschlossen ist.

10. Netz nach einem der Ansprüche 1 bis 8, **dadurch gekennzeichnet, dass** die Lichtleitfaser (F') vom einseitig gerichteten absteigenden Typ ist, der Multiplexer (MX) ein Multiplexer ist, der einen Ausgang und N Eingänge aufweist, und die Kommunikationsstationen (Sᵢ) je mindestens eine Multiplex-Empfangsvorrichtung (MR) aufweisen, die an ein Umlenkmittel (DO) angeschlossen ist, das selbst mit einem der Kopplungsmittel (CP', MXB, DXB, MDB) oder mit der Faser (F') gekoppelt ist.

11. Netz nach einem der Ansprüche 1 bis 8, **dadurch gekennzeichnet, dass** die Lichtleitfaser (F") vom zweiseitig gerichteten Typ ist, der Demultiplexer und/oder Multiplexer (DMX) ein Demultiplexer/Multiplexer ist, der einen Eingang/Ausgang und N Ausgänge/Eingänge aufweist, und die Kommunikationsstationen (Sᵢ) je mindestens eine Multiplex-Sendevorrichtung (MT), die an einen optischen Koppler (CP) angeschlossen ist, mindestens eine Multiplex-Empfangsvorrichtung (MR), die an Umlenkmittel (DO) angeschlossen ist, und einen optischen Zirkulator (CR) aufweisen, der mit einem der Kopplungsmittel (CP', MXB, DXB, MDB) oder mit der Faser (F") und mit den Umlenkmitteln (DO) und dem optischen Koppler (CP) gekoppelt ist.

12. Netz nach einem der Ansprüche 1 bis 8, **dadurch gekennzeichnet, dass** es i) eine erste Lichtleitfaser (F) vom absteigenden einseitig gerichteten Typ, die an einen Multiplexer (MX) angeschlossen ist, der einen Ausgang und N Eingänge aufweist, ii) eine zweite Lichtleitfaser (F') vom aufsteigenden einseitig gerichteten Typ aufweist, die an einen Demultiplexer (DX) angeschlossen ist, der einen Eingang und N Ausgänge aufweist, und dass die Kommunikationsstationen (Sᵢ) je mindestens eine Multiplex-Sendevorrichtung (MT), die an einen optischen Koppler (CP) angeschlossen ist, der selbst an eines der Kopplungsmittel (CP', MXB, DXB, MDB) gekoppelt ist, die an die zweite Lichtleitfaser (F') angeschlossen sind, oder an die zweite Lichtleitfaser (F') angeschlossen ist, und mindestens eine Multiplex-Empfangsvorrichtung (MR) aufweisen, die an ein Umlenkmittel (DO) angeschlossen ist, das selbst an eines der Kupplungsmittel (CP', MXB, DXB, MDB), die an die erste Lichtleitfaser (F) angeschlossen sind, oder an die erste Lichtleitfaser (F) angeschlossen ist.

13. Netz nach einem der Ansprüche 10 bis 12, **dadurch gekennzeichnet, dass** die Umlenkmittel (DO) aus einer Gruppe ausgewählt werden, die einen Demultiplexer und einen Schalter mit Wellenlängenauswahl enthält.

14. Netz nach einem der Ansprüche 1 bis 13, **dadurch gekennzeichnet, dass** es eine Ringstruktur aufweist.
